# FASCICULE DE BREVET EUROPEEN

(11) **EP 1 004 206 B1**
(45) Date de publication et mention de la délivrance du brevet: **10.10.2001**
(21) Numéro de dépôt: 98938738.6
(22) Date de dépôt: 10.07.1998
(51) Int. Cl.: H04N 7/26, H04N 7/50

(54) **SIGNAL D'ANIMATION D'UNE SCENE GRAPHIQUE, PROCEDE ET DISPOSITIF CORRESPONDANTS**
SIGNAL DER ANIMATION EINER GRAFISCHEN SZENE, ENTSPRECHENDE VORRICHTUNG UND VERFAHREN
GRAPHIC SCENE ANIMATION SIGNAL, CORRESPONDING METHOD AND DEVICE

(30) Priorité: 11.07.1997 FR 9709119
(43) Date de publication de la demande: 31.05.2000
(73) Titulaire: FRANCE TELECOM, 75015 Paris (FR); TELEDIFFUSION DE FRANCE, 75732 Paris Cédex 15 (FR)
(72) Inventeur: SIGNES, Julien, F-35700 Rennes (FR)
(74) Mandataire: Vidon, Patrice
(86) Numéro de dépôt international: FR9801523
(87) Numéro de publication internationale: WO9903281

(56) Documents cités:
- EP-A- 0 804 032
- AVARO O ET AL: "The MPEG-4 systems and description languages: A way ahead in audio visual information representation" SIGNAL PROCESSING. IMAGE COMMUNICATION, vol. 4, no. 9, mai 1997, page 385-431 XP004075337
- DOENGES P K ET AL: "Audio/video and synthetic graphics/audio for mixed media" SIGNAL PROCESSING. IMAGE COMMUNICATION, vol. 4, no. 9, mai 1997, page 433-463 XP004075338
- ARIKAWA ET AL.: "Dynamic LoD for QoS Management in the Next Generation VRML" INTERNATIONAL CONFERENCE ON MULTIMEDIA COMPUTING AND SYSTEMS,17 juin 1996, pages 24-27, XP002060163 HIROSHIMA, JP
- KATKERE A ET AL: "Interactive video on WWW: Beyond VCR-like interfaces" COMPUTER NETWORKS AND ISDN SYSTEMS, vol. 11, no. 28, mai 1996, page 1559-1572 XP004018251
- MULROY: "VRML gets real the MPEG-4 way" COLLOQUIUM ON TELECONFERENCING FUTURES, 17 juin 1997, pages 4.1-4.4, XP002060164 LONDON, UK

## Description

Le domaine de l'invention est celui de la restitution de scènes graphiques animées, par exemple sur un terminal multimédia. Plus précisément, l'invention concerne la transmission de scènes animées, ou d'éléments de cette scène.

Par scène graphique, on entend ici l'agencement d'un ensemble d'objets graphiques, images et/ou vidéo, dans le temps et dans l'espace. Ces scènes graphiques peuvent être en deux ou trois dimensions, et contenir divers types de paramètres graphiques.

L'invention s'applique notamment dans tous les cas où une représentation compacte et efficace de l'animation de scènes graphiques est requise. C'est par exemple le cas :
- des jeux et autres applications multi-utilisateurs en réseau, telles que le travail coopératif, où l'on a besoin d'échanger par exemple de nouvelles positions d'objets ;
- des services de consultation multimédia utilisant des objets graphiques 2D ou 3D.

Des formats de description de scènes graphiques sont déjà connus. La norme ISO/BEC DIS 14772-1 décrit ainsi le format VRML 2.0. Le groupe de normalisation MPEG-4 a défini également un format de description de scène, appelé BIFS (Binary Format for Scene (format binaire pour scène)), qui s'inspire de VRML 2.0. Le format BIFS est notamment présenté dans "The MPEG-4 Systems Verification Model" (ISO/IEC JTC1/SC29/WG 11-N1593, MPEG 97, avril 1997).

Ce format de description de scène a pour but de décrire les relations spatiotemporelles entre les divers objets graphiques d'une scène. Pour cela, il définit un certain nombre de noeuds, ou objets, représentant toutes les primitives graphiques que l'on veut représenter. Chacun de ces noeuds a des champs prédéfinis qui représentent ses caractéristiques. En d'autres termes, le format BIFS permet de transmettre une structure de scène sous la forme d'une description paramétrique, ou un script

Quelques tentatives ont été faites, pour animer certains types de scènes. Ainsi, on connait un format d'animation faciale, défini par le groupe SNHC de la normalisation MPEG-4 ("The MPEG-4 SNHC Verification Model, ISO/IEC 1/SC29/WG11 N 1693, MPEG 97, avril 1997). Toutefois, ce format est spécifique d'une application donnée, la visiophonie, et ne peut pas être généralisée.

On connaît également, par le document AVARO O. et al "The MPEG. 4 systems and description languages : a way ahead in audio visual information representation" (signal processing - image communication, vol. 4, n°9, mai 1997, pp. 385-431) une technique consistant notamment à télécharger un script (classe JAVA (marque déposée)) programmant le comportement de la scène. Cette technique présente, dans la pratique, une grande lourdeur.

Le document DOENGES P.K. et al "Audio/video and synthetic graphics/audio for mixed media" (signal processing - image communication, vol. 4, n° 9, mai 1997, pp. 433-463) est destiné en particulier au codage des visages et des corps humains, et met en oeuvre un codage d'objets graphiques à trois niveaux.

Le langage VRML a également défini deux méthodes pour transmettre l'animation de scènes graphiques :
- une première méthode basée sur l'interpolation linéraire, qui permet de décrire des changements linéaires par morceaux sur des paramètres de la scène. Ce mécanisme utilise les instructions "ROUTE" et les noeuds de type "Interpolator". Les "ROUTES" sont des mécanismes de passage d'événements permettent de définir des connexions entre champs de façon que, lorsque un premier champ change de valeur, le second champ auquel il est connecté par une "ROUTE" prend également la même valeur ;
- une seconde méthode permettant de décrire l'animation à l'aide de scripts, qui sont des fonctions permettant de calculer une nouvelle valeur de champ entre chaque rendu de scène, par une fonction mathématique.

Dans un autre domaine, KATKERE propose, dans "Interactive video or WWW : Beyond VCR-like interface" (computer networks and ISDN systems, vol. 11, n° 28, mai 1996, pp. 1559-1572) une technique de transmission de scènes 3D, répondant au problème particulier d'une vidéo à points de vue multiples.

Ces méthodes connues présentent au moins deux inconvénients majeurs.

Tout d'abord, elles imposent le recalcul d'une valeur, ce qui peut entraîner une grande complexité en nombre d'opérations pour obtenir l'animation, et ce qui nécessite des moyens suffisamment puissants dans le terminal.

Par ailleurs, ces méthodes supposent que l'on connaît a priori les paramètres d'animation. Ceci n'est évidemment pas le cas lors de l'utilisation d'animations dans une application de communication, par exemple.

L'invention a notamment pour objectif de pallier ces divers inconvénients de l'état de la technique.

Plus précisément, un objectif de l'invention est de fournir une structure de transmission de données d'animation, ainsi qu'un procédé et un dispositif correspondants, qui permettent une animation simple à mettre en oeuvre et consommant peu de ressources de transmission, pour tout type de scènes graphiques, et notamment celles dont l'évolution n'est pas connue a priori .

En d'autres termes, l'invention a notamment pour objectif de fournir une technique d'animation de scènes graphiques qui répondent à au moins un des aspects suivants :
- simplicité de la mise en forme et de l'interprétation des données ;
- faible consommation en moyens de mémorisation et/ou en ressources de transmission ;
- capacité à animer tout type d'objet et tout type de scène graphique ;
- possibilité d'animer des objets, ou noeuds, de façon quelconque, c'est-à-dire non prédéfinie.

Un autre objectif de l'invention est de fournir une telle technique, permettant la réalisation de terminaux multimédia simples et peu coûteux, c'est-à-dire ne nécessitant ni des moyens de calcul importants, ni de gros moyens de mémorisation de données.

Encore un autre objectif est de fournir une telle technique, qui puisse être mise en oeuvre sur des réseaux fonctionnant à bas débit.

L'invention a également pour objectif de fournir une telle technique, qui soit compatible avec les normes VRML et MPEG-4.

Ces objectifs, ainsi que d'autres qui apparaîtront plus clairement par la suite, sont atteints selon l'invention à l'aide d'un signal de données d'animation d'une scène graphique, destiné à des moyens de constrution d'images pouvant être présentées sur au moins un écran,ladite scène graphique à animer ayant été probablement chargée dans lesdits moyens de construction d'images, sous la forme d'un ensemble d'objets, au moins certains desdits objets ayant un identifiant qui leur est propre, ledit signal comprenant :
- un masque d'animation unique, délivré en préambule à ladite animation, et affectant à au moins un desdits objets un masque élémentaires comprenant :
   - l'identifiant dudit objet, tel que défini dans ladite scène graphique à animer ; et
   - la désignation d'au moins un champ de caractérisation dynamique dudit objet, représentatif d'une caractéristique dudit objet susceptible d'être modifié ;
- des trames d'animation, comprenant, selon l'ordre défini par ledit masque, des données de mise à jour des champs de caractérisation dynamiques desdits objets, de façon à permettre leur modification,
lesdits moyens de construction décodant les données dudit masque d'animation, et initialisant l'animation à partir de celui-ci, et mettant à jour ladite scène en fonction desdites trames d'animation.

Ainsi, l'animation d'une scène est particulièrement simple et efficace. La quantité de données transmises est restreinte, et il n'est pas nécessaire de disposer de moyens de traitement important dans les terminaux. L'utilisation du masque prédéfini permet de simplifier et réduire les trames.

De plus, il est possible d'animer des scènes sans que l'évolution de celles-ci soit connue à l'avance. Cela permet par exemple de mettre en oeuvre tous types d'applications interactives.

De façon avantageuse, chacun desdits masques élémentaires comprend :
- l'identifiant dudit objet (ID) ;
- un bloc de désignation (masque bin), précisant les champs dynamiques actifs, pouvant être modifiés lors de l'animation, et les champs dynamiques invariants lors de l'animation ;
- éventuellement, un bloc de définition (Qpi) de données de quantification applicables à chacun desdits champs dynamiques actifs.

Au moins certains desdits champs dynamiques actifs peuvent être des champs multiples formant un vecteur. Dans ce cas, ledit masque élémentaire comprend une information précisant si tous les champs formant ledit vecteur ou seulement certains d'entre eux sont actifs, ledit bloc de définition étant adapté en conséquence.

Selon un mode de réalisation préférentiel, au moins certains desdits champs dynamiques sont codés, dans au moins certaines desdites trames d'animation, à l'aide d'un codage prédictif. Dans chaque trame d'animation, on associe alors à chaque champ dynamique une information précisant si ce dernier est codé en mode prédicitf ou en mode absolu.

Avantageusement, chacune desdites trames d'animation comprend :
- une zone de définition, indiquant pour chacun desdits objets si des paramètres d'animation le concernant sont transmis dans ladite trame d'animation ;
- une zone de données d'animation, délivrant les informations nécessaires à l'animation des objets répertoriés dans lasite zone de définition.

Selon un mode de réalisation particulier, ladite zone de données d'animation peut comprendre au moins certaines des informations appartenant au groupe comprenant :
- le type de codage (isIntra) ;
- un mot de synchronisation (Sync) :
- une référence de synchronisation, ou "time code" (IParam) ;
- une valeur de fréquence des trames d'animation pour l'objet considéré (IParam) ;
- un saut de N trames pendant lequel une information ne sera pas envoyée (IParam) ;
- une indication de changement de valeur de paramètre de quantification (hasQP) ;
- une nouvelle valeur de paramètre de quantification (QPi) ;
- une valeur codée d'un champ dynamique (Ivalueᵢ ou Pvalueᵢ).

Lesdits champs dynamiques peuvent notamment appartenir au groupe comprenant :
- des champs définissant l'aspect dudit objet ;
- des champs définissant la position dudit objet ;
- des champs définissant le mouvement dudit objet ;
- des champs définissant la forme dudit objet ;
- des champs définissant l'illumination dudit objet.

L'invention concerne également un procédé de transmission de données d'animation d'une scène graphique, destinée à être présentée sur au moins un écran, comprenant :
- une étape d'initialisation de l'animation. dans laquelle on assure la transmission :
   - d'un masque d'animation unique, délivré en préambule à ladite animation, et affectant à au moins un desdits objets un masque élémentaires comprenant :
      - l'identifiant dudit objet. tel que défini dans ladite scène graphique à animer ; et
      - la désignation d'au moins un champ de caractérisation dynamique dudit objet, représentatif d'une caractéristique dudit objet susceptible d'être modifié ;
- une étape d'animation, dans laquelle on assure la transmission de trames d'animation, comprenant, selon l'ordre défini par ledit masque, des données de mise à jour des champs de caractérisation dynamiques desdits objets, de façon à permettre leur modification.

Enfin, l'invention concerne encore un dispositif d'animation d'une scène graphique, destinée à être présentée sur au moins un écran, comprenant:
- des moyens de construction d'une initialisation de l'animation, à partir :
   - d'un masque d'animation unique, délivré en préambule à ladite animation, et affectant à au moins un desdits objets un masque élémentaires comprenant :
      - l'identifiant dudit objet, tel que défini dans ladite scène graphique à animer ; et
      - la désignation d'au moins un champ de caractérisation dynamique dudit objet, représentatif d'une caractéristique dudit objet susceptible d'être modifié ;
- des moyens d'animation dynamique de ladite scène, à partir de trames d'animation, comprenant, selon l'ordre défini par ledit masque, des données de mise à jour des champs de caractérisation dynamiques desdits objets, de façon à permettre leur modification.

D'autres caractéristiques et avantages de l'invention apparaîtront plus clairement à la lecture de la description suivantes d'un mode de réalisation préférentiel de l'invention, donné à titre de simple exemple illustratif et non limitatif, et des dessins annexés, parmi lesquels :
- la figure 1 illustre le principe général d'animation d'une scène graphique selon l'invention ;
- les figures 2 et 3 présentent deux applications avantageuses du principe de l'invention, correspondant respectivement à une application multi-utilisateur et une application dans laquelle le flux d'animation est pré-calculé ;
- la figure 4 est un synoptique général du procédé d'animation de l'invention ;
- la figure 5 illustre la structure générale d'un masque d'animation selon l'invention ;
- la figure 6 présente la structure d'un masque élémentaire de la figure 5 ;
- la figure 7 représente un détail du masque élémentaire de la figure 6, dans le cas de champs à valeurs multiples ;
- la figure 8 est un schéma illustrant le codage des paramètres transmis selon l'invention ;
- la figure 9 présente le décodage correspondant au codage de la figure 8 ;
- la figure 10 illustre de façon schématique une trame d'animation selon l'invention.

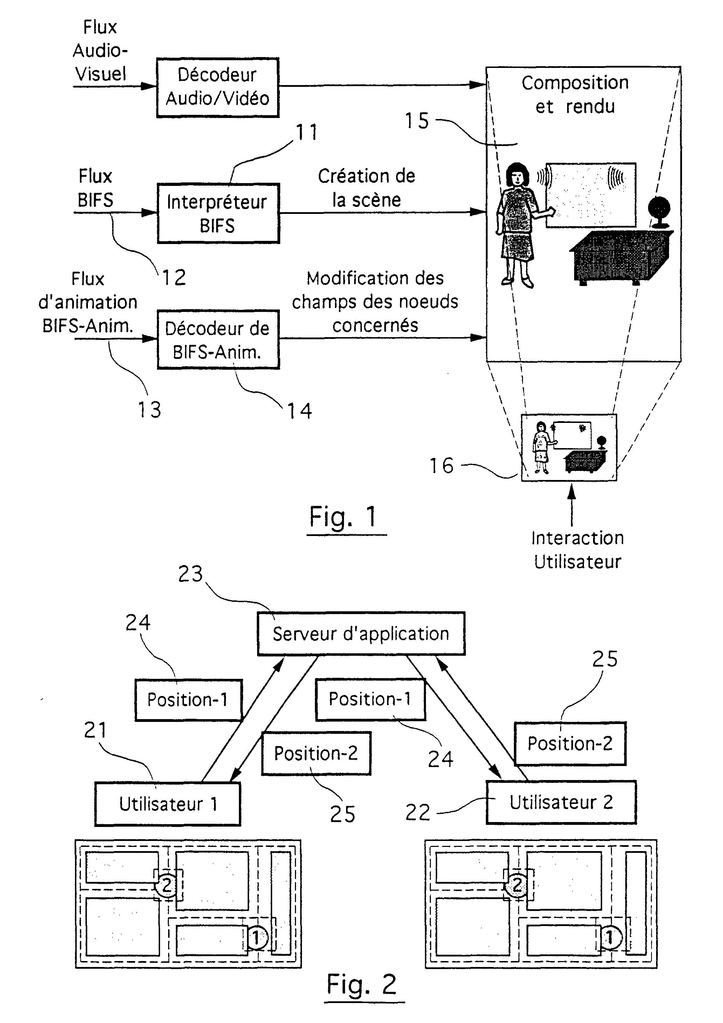

La figure 1 illustre de façon schématique un terminal, par exemple compatible avec la norme MPEG-4 et intégrant le signal, ou flux, d'animation de l'invention.

Ce terminal comprend des moyens 11 de création de la scène d'origine, à partir d'un flux de données 12, au format BIFS, ou masque d'animation. En d'autres termes, le terminal charge la scène graphique. Celle-ci est décrite en termes d'objets, ou noeuds.

On rappelle que le but du format de description de scène est de décrire les relations spatio temporelles entre les objets graphiques d'une scène. Pour cela le format BIFS définit un certain nombre de « noeuds » représentant toutes les primitives graphiques que l'on veut pouvoir représenter. Chacun de ces noeuds a des champs pré-définis qui représentent les caractéristiques de ces noeuds. Par exemple, la primitive Cercle a pour champ « rayon » de type nombre flottant. La primitive « Objet Vidéo » a pour paramètre le temps de début et de fin de cette vidéo.

Selon l'invention, certains de ces noeuds peuvent être déclarés comme modifiables, ce qui permettra de les modifier dans le futur. Ceci peut s'exprimer par le mécanisme "DEF" dans la norme VRML, et par un mécanisme similaire dans le système MPEG-4.

Une fois cette scène chargée, soit par requête de l'utilisateur (mode interactif), soit de manière automatique (mode passif, dit encore « push model »), un flux d'animation appelé « BIFS Anim » 13 est chargé et modifie les paramètres de la scène.

La modification, ou animation, est assurée par le décodeur 14. A chaque nouvelle valeur des champs des noeuds concernés par l'animation, il modifie les champs correspondants, et ces nouvelles valeurs sont prises en compte dans la prochaine boucle de rendu. Lors de la boucle de rendu, pour chacun des noeuds de la scène, on appelle les instructions graphiques sur le processeur graphique qui permettent de dessiner la primitive correspondante.

On obtient ainsi une image animée 15, que l'on peut présenter (16) à l'utilisateur. Le cas échéant, celui-ci peut intervenir (17), à l'aide d'une interface appropriée.

Quand un flux audio ou vidéo 18 est utilisé, un mécanisme 19 similaire est utilisé.

Les applications de cette technique sont nombreuses. Ainsi, la figure 2 illustre le cas d'un jeu multi-utilisateur. Les deux utilisateurs 21 et 22 chargent la scène originale décrivant le jeu. Ensuite, le serveur 23 déclare à l'utilisateur 21 qu'il va recevoir les positions successives 24 de l'utilisateur 22. Ces positions sont transmises (25) par l'utilisateur 22 au serveur 23, qui les retransmet ensuite à l'utilisateur 21. L'ensemble des données de configuration de l'animation et des paramètres d'animation (ici les positions de l'utilisateur 22) forment un flux « BIFS-Anim » 13. Cette transmission est symétrique. L'utilisateur 21 envoie selon le même processus ses positions à l'utilisateur 22.

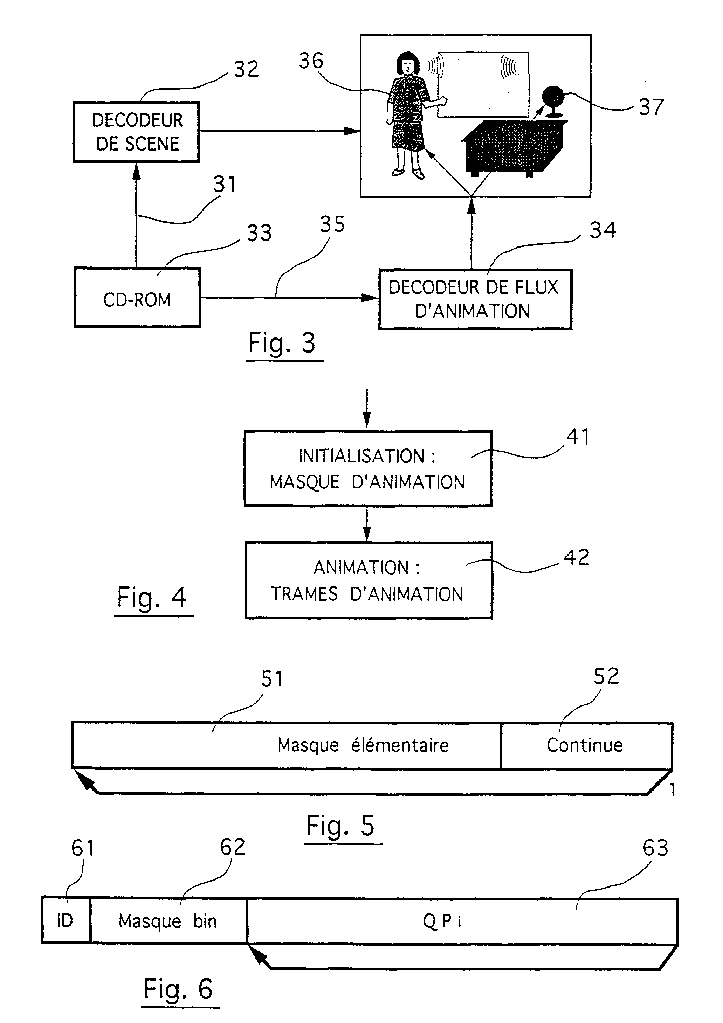

Un autre exemple d'utilisation de flux d'animation, utilisé dans un contexte où il est pré-calculé et illustré en figure 3. Dans un premier temps, le fichier 31 décrivant la scène originale est chargé (par exemple depuis un CD-ROM 33) et est décodé par le Décodeur de scène 32. La scène originale est visualisée, puis le décodeur de flux d'animation 38 lit les paramètres d'animation 35 et anime le personnage 36 ainsi que la mape-monde 37 de façon synchronisée.

La figure 4 présente le principe général de l'invention, sous la forme d'étapes successives. On peut distinguer deux étapes successives, à savoir une étape 41 de construction de la scène original, ou étape d'initialisation, à partir d'un masque d'animation, et une étape d'animation 42, par mise à jour régulière de la scène, à partir de trames d'animation.

Ainsi, Le principe général du format d'animation consiste à transmettre les paramètres suivants :

Premièrement, les paramètres de configuration de l'animation, encore appelé masque d'animation, qui décrivent les champs à transmettre, et spécifie si nécessaire leurs paramètres de quantification et de compression. Les paramètres peuvent être choisis parmi les champs de type *eventIn* ou *exposedField* (tels que défini dans le standard VRML) des noeuds qui ont été déclarés comme modifiables dans la scène. Le masque d'animation est décomposé en plusieurs masques élémentaires qui définissent ces paramètres.

Ensuite, les données d'animation, qui sont envoyés en une série de trames d'animation. Une trame d'animation contient l'ensemble des nouvelles valeurs des paramètres d'animation pour un instant donné. Ces paramètres peuvent être envoyées selon deux modes :
- Mode « Intra ». Dans ce cas, les paramètres sont envoyés de façon absolue. En mode Intra, il est possible de redéfinir de nouveaux paramètres pour la quantification.
- Mode « Prédictif » dans lequel on envoie la différence entre ce paramètre et une prédiction d'après les échantillons précédents.
Ces paramètres d'animation peuvent s'appliquer à tout champ de tout noeud d'une scène qui a été précédemment déclaré comme pouvant être animé. Prenons l'exemple du noeud Transform dans la spécification VRML. Sa spécification est donnée par :

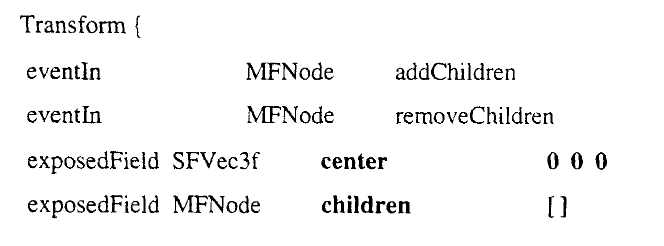

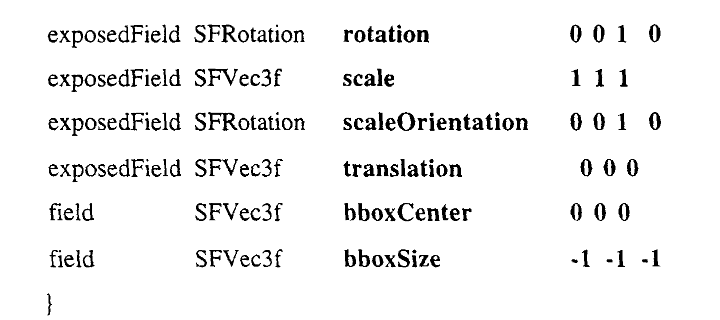

Dans cet exemple on voit que les champs :
- rotation,
- scale,
- scaleOrientation,
- translation,
sont typiquement des paramètres intéressants pour l'animation. Ainsi il est nécessaire de déclarer tous les noeuds que l'on peut animer, pour pouvoir ensuite désigner les champs spécifiques d'animation. On parlera alors de champ « dynamique ». Les champs dynamiques doivent être désignés à l'avance dans notre système, afin de pouvoir utiliser le format le plus compact possible pour l'animation.

Seules les valeurs scalaires pourront être modifiées lors des animations. Par exemple, si on se réfère à la norme VRML 2.0, les paramètres du type suivant pourront être animés :
- SFInt32,
- SFFloat,
- SFDouble,
- SFRotation,
- SFColor.

Tous les tableaux de valeurs de type précédent pourront également être modifiés. Dans le cas d'une valeur de type tableau, il est possible soit de modifier soit la totalité des champs, soit certaines valeurs que l'on choisit explicitement.

On décrit maintenant plus en détail les signaux mis en oeuvre dans le cadre de l'invention.

Les masques d'animation représentent les champs qui doivent être transmis, ainsi que leurs paramètres de quantification. Pour chaque noeud et chacune des valeurs à modifier, on utilise une structure de masque dont la syntaxe est donnée ci-dessous. Le principe du masque est de désigner les champs dynamiques que l'on désire animer. On donne ensuite éventuellement les paramètres de quantification de chaque paramètre.

Ainsi on peut représenter la structure des paramètres de configuration de l'animation de la manière illustrée en figure 5.

La sémantique des paramètres est la suivante :
- Masque élémentaire 51 : Définition des champs dynamiques qui vont être animés pour ce noeud, ainsi que des paramètres de quantification correspondants.
- Continue 52 : Bit mis à 1 si on a encore d'autres noeuds à animer dans le même flux.

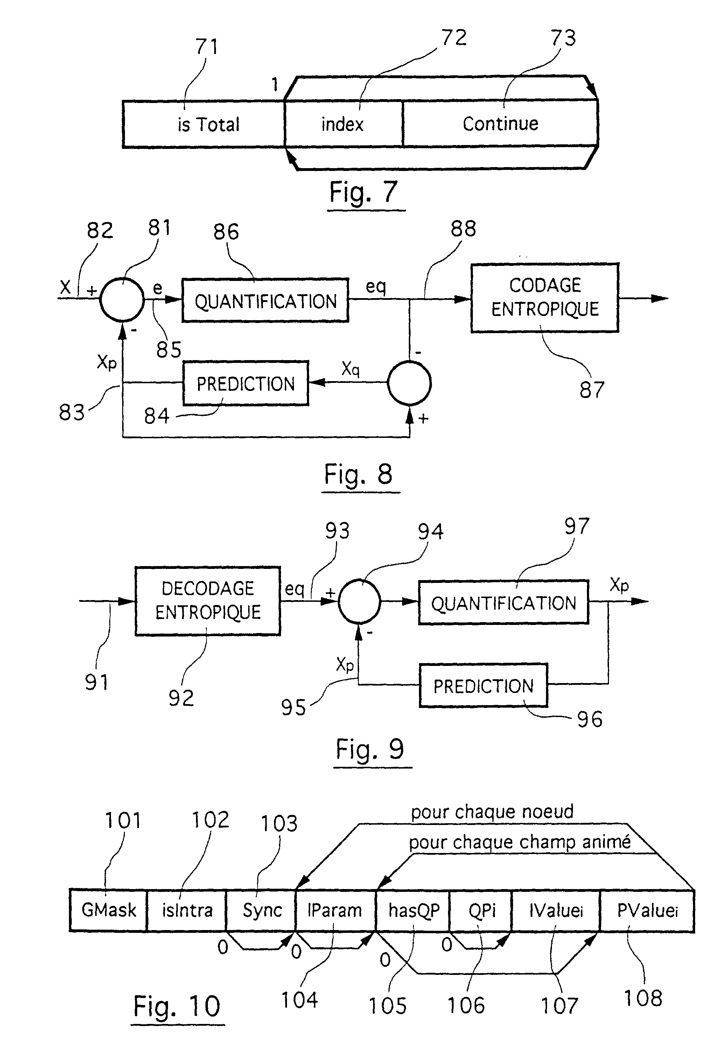

Un masque élémentaire est illustré en figure 6. La sémantique correspondante est la suivante :
- ID 61 : Identifiant unique du noeud à modifier. Cet identifiant est connu dans la scène originale.
- Masque bin 62 : masque binaire de longueur égale au nombre de champs dynamiques du type de noeud animé. 0 est envoyé si le champ dynamique n'est pas animé, 1 s'il l'est.
   Dans le cas de champs multiples, il est nécessaire de préciser de plus les indices des champs à modifier. Dans le cas d'indices multiples à modifier, on pourra choisir de modifier l'intégralité des champs ou seulement une partie du vecteur. La syntaxe du message est proposée dans la figure 7.
- Qpi 63 : Paramètres de quantification pour le champ dynamique i. Il y a autant de paramètres de quantification que de champs dynamiques déclarés actifs dans le masque binaire. En particulier, ces champs peuvent être vides dans le cas où la quantification ne requiert pas de paramètres particuliers. La détermination de la syntaxe et de la sémantique de ces champs est une connaissance a priori du serveur qui envoie ce flux d'animation.

La figure 7 présente le détail de la syntaxe du masque binaire pour les champs à valeurs multiples. La sémantique est ici la suivante :
- isTotal 71 : Si ce masque est mis à 1, alors on veut modifier toutes les valeurs des champs. Autrement on sélectionne quelques éléments du vecteur à modifier
- index 72 : L'index du champ dans le vecteur à modifier.
- Continue 73 : Si ce drapeau est mis à 1, ceci indique que l'on veut encore modifier d'autres éléments du vecteur.

Avantageusement, on utilise, au moins dans certaines situations, un codage prédictif, qui permet de réduire le nombre d'informations à transmettre dans les trames d'informations.

La compression des paramètres peut se faire par l'utilisation d'un schéma de compression de type DPCM : on pourra coder les valeurs d'un paramètre soit en mode" prédictif" (P), soit en mode "Intra" (I) :
- En mode P, pour chaque nouvelle valeur d'un champ que l'on veut transmettre, on code sa différence par rapport à la valeur précédente. Cette différence est quantifiée puis représentée de manière optimale par un codage entropique à longueur variable.
- En mode I, les valeurs des champs dynamiques sont codées directement, par utilisation d'une simple quantification puis représentées par un code à longueur variable.

Ainsi, le schéma bloc de l'algorithme général de compression peut être décrit par la figure 8. On soustrait (81) aux données source 82 les données estimées 83, délivrées par des moyens 84 de prédiction. Le signal d'erreur correspondant 85 est quantifié (86), puis subit un codage entropique 87. Le signal quantifié 88 alimente les moyens de prédiction 84.

Pour le décodage, on met alors en oeuvre le procédé correspondant, illustré en figure 9. Les données reçues 91 subissent un décodage entropique 92, puis on ajoute (94) au signal décodé 93 le signal prédit 95 par les moyens de prédiction 96. On applique ensuite au signal une quantification inverse (97).

Le flux de données d'animation peut donc avoir la structure illustrée en figure 10.

Chaque trame d'animation débute par un masque 101 des groupes de valeurs ("GMask"). Ce masque 101 est constitué d'une suite d'éléments binaires "0" et "1" qui spécifie pour chaque noeud, dans l'ordre de la spécification du masque d'animation, si des paramètres d'animation suivent ou non.

Ensuite, on précise si un codage prédictif est mis ou non en oeuvre, à l'aide de l'indicateur 102 "isIntra". Si cet indicateur vaut "1", par exemple, on code la valeur en absolu (mode "Intra"). S'il vaut "0", dans le même exemple, un codage prédictif est mis en oeuvre.

Si le mode "Intra" est utilisé, on peut prévoir un mot de synchronisation 103. qui sert à se recaler dans le flux.

Ensuite, pour chaque noeud animé, on transmet :
- optionnellement, si on est en mode "Intra", des paramètres 104 liés à la transmission ("IParam"), tels que :
   - une réference de synchronisation, ou "time code", pour la trame "Intra" concernée ;
   - une nouvelle valeur de fréquence des trames d'animation pour le noeud animé ;
   - un saut de trames éventuel, indiquant qu'on enverra plus certaines informations pendant N trames ;
- une suite de paramètres, dans l'ordre des champs, avec successivement :
   - dans le cas d'un codage "Intra", un indicateur 105 "has QP" précisant si les valeurs des paramètres de quantification sont ("has QP"=1, par exemple) ou non ("has QP"=0, par exemple) redéfinies pour les valeurs qui suivent ;
   - si "has QP"=1, la nouvelle valeur 106 des paramètres de quantification "QPi" ;
   - la valeur 107 "Ivaluei" ou 108 "Pvaluei", qui est la valeur codée du champ dynamique i, dans le mode sélectionné (intra ou prédictif).

Tout type de schéma de quantification ou de codage entropique peut être utilisé par le codeur de données d'animation. Ainsi on pourra utiliser pour la quantification divers types de quantifications scalaires ou vectorielles, et pour le codage entropique tout schéma de réduction de débit sans perte.

Afin de pouvoir commander de manière interactive la marche ou l'arrêt d'un flux d'animation, il est proposé selon l'invention un nouveau noeud au format BIFS ou VRML. Ce noeud AnimationStream sera un noeud de type «Time Dependent Node» dans la terminologie VRML. La syntaxe de représentation de ce noeud est la suivante :

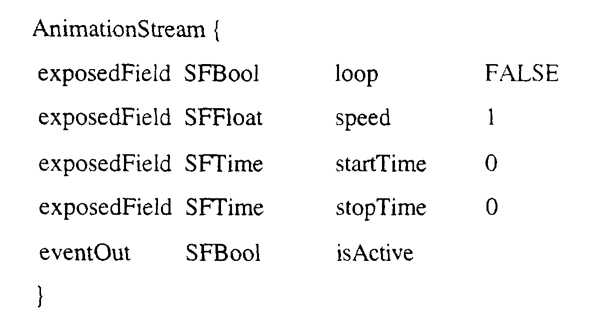

Ce noeud sera transporté dans le flux d'animation VRML ou BIFS. Un exemple d'utilisation de ce noeud est donné ci-dessous. Dans cet exemple, on visualise un cube. Sur un "click" de l'utilisateur, on va animer la couleur, la position et la composante X de sa taille. Cet exemple est donné dans un format ASCII mais peut être transcrit dans sa version binaire en BIFS. La scène originale est donnée par :

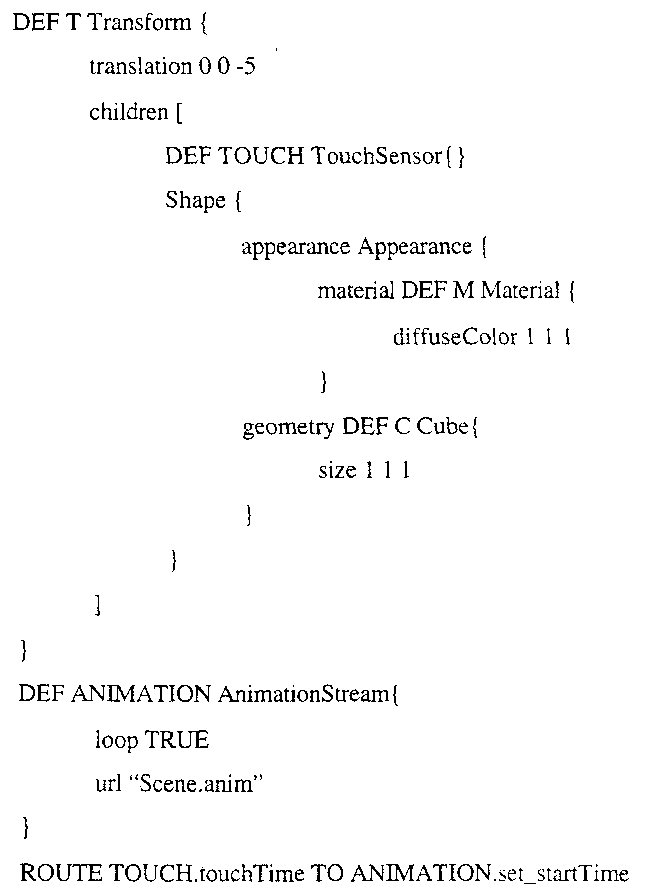

Quand l'utilisateur clique avec sa souris sur le cube, le flux d'animation correspondant à l'identifiant « ANIMATION » est démarré. Le masque d'animation du flux, ou fichier, "Scene.anim" contient les informations suivantes :
- T: Identifiant de la transformation
- 0001: Seul le champ translation est modifié
- 1: On va animer la totalité du champ vectoriel de position
- 00405 108: La position varie dans le parallépipède déterminé par les points (0, 0 ,4) et (0,5,10), et on utilise 256 boules sur l'axe Ox pour quantifier en mode Intra
- 0-2-50376: La position relative varie dans le cube déterminé par les points (0, 0 ,4) et (0,0,10), et on utilise 64 = 2⁶ -1 couronnes en D3 sur l'axe Oₓ pour quantifier en mode P
- 1: On continue
- M: On veut animer la couleur de l'objet
- 010001: On veut animer la couleur et la transparence de l'objet
- 10 240 8: Couleur varie en mode I entre 10 et 240 sur 8 bits
- -558: Couleur varie en mode P entre 10 et 240 sur 8 bits
- 10 240 8: idem pour la transparence en mode I
- -5 5 8: idem pour la transparence en mode P
- 1: On continue
- c: On veut modifier la taille du cube
- 1: On modifie sa taille
- 0: On ne veut modifier que certains éléments du vecteur taille
- 0: On veut modifier la taille de la boite sur l'axe Ox uniquement
- 2 5.5 5: La valeur est varie entre 0 et 5.5 en mode Intra, exprimé sur 5 bits
- - 3 3 4: La valeur relative varie entre -3 et 3 sur 4 bits en mode P
- 0: Fin du masque d'animation

## Revendications

1. Signal de données d'animation d'une scène graphique, destiné à des moyens de construction d'images (15) pouvant être présentées (16) sur au moins un écran, ladite scène graphique à animer ayant été préalablement chargée dans lesdits moyens de construction d'images, sous la forme d'un ensemble d'objets, au moins certains desdits objets ayant un identifiant qui leur est propre,
**caractérisé en ce qu'**il comprend :
- un masque d'animation unique, délivré en préambule (41) à ladite animation, et affectant à au moins un desdits objets, un masque élémentaire (51) comprenant :
- l'identifiant (61) dudit objet, tel que défini dans ladite scène graphique à animer ; et
- la désignation d'au moins un champ (62) de caractérisation dynamique dudit objet, représentatif d'une caractéristique dudit objet susceptible d'être modifié ;
- des trames d'animation (42), comprenant, selon l'ordre défini par ledit masque, des données de mise à jour des champs de caractérisation dynamiques desdits objets, de façon à permettre leur modification,
lesdits moyens (15) de construction décodant les données dudit masque d'animation, et initialisant l'animation à partir de celui-ci, et mettant à jour ladite scène en fonction desdites trames d'animation.

2. Signal selon la revendication 1, **caractérisé en ce que** chacun desdits masques élémentaires comprend :
- l'identifiant (61) dudit objet (ID) ;
- un bloc de désignation (62) (masque bin), précisant les champs dynamiques actifs, pouvant être modifiés lors de l'animation, et les champs dynamiques invariants lors de l'animation ;
- éventuellement, un bloc de définition (63) (Qpi) de données de quantification applicables à chacun desdits champs dynamiques actifs.

3. Signal selon la revendication 2, **caractérisé en ce qu'**au moins certains desdits champs dynamiques actifs (63) sont des champs multiples formant un vecteur, et **en ce que** ledit masque élémentaire comprend une information (71) précisant si tous les champs formant ledit vecteur ou seulement certains d'entre eux sont actifs, ledit bloc de définition étant adapté en conséquence.

4. Signal selon l'une quelconque des revendications 1 à 3, **caractérisé en ce qu'**au moins certains desdits champs dynamiques sont codés, dans au moins certaines desdites trames d'animation, à l'aide d'un codage prédictif (84), et **en ce que**, dans chaque trame d'animation, on associe à chaque champ dynamique une information (102) précisant si ce dernier est codé en mode prédictif ou en mode absolu.

5. Signal selon l'une quelconque des revendications 1 à 4, **caractérisé en ce que** chacune desdites trames d'animation comprend :
- une zone de définition (101), indiquant pour chacun desdits objets si des paramètres d'animation le concernant sont transmis dans ladite trame d'animation ;
- une zone de données d'animation (102 à 108), délivrant les informations nécessaires à l'animation des objets répertoriés dans ladite zone de définition.

6. Signal selon la revendication 5, **caractérisé en ce que** ladite zone de données d'animation comprend au moins certaines des informations appartenant au groupe comprenant :
- le type de codage (isIntra) (102) ;
- un mot de synchronisation (Sync) (103) ;
- une référence de synchronisation (IParam) (104) ;
- une valeur de fréquence des trames d'animation pour l'objet considéré (IParam) (104) ;
- un saut de N trames pendant lequel une information ne sera pas envoyée (IParam) (104) ;
- une indication de changement de valeur de paramètre de quantification (hasQP) (105) ;
- une nouvelle valeur de paramètre de quantification (QPi) (106) ;
- une valeur codée d'un champ dynamique (Ivalueᵢ ou Pvalueᵢ) (107, 108).

7. Signal selon l'une quelconque des revendications 1 à 6, **caractérisé en ce que** lesdits champs dynamiques appartiennent au groupe comprenant :
- des champs définissant l'aspect dudit objet ;
- des champs définissant la position dudit objet ;
- des champs définissant le mouvement dudit objet ;
- des champs définissant la forme dudit objet ;
- des champs définissant l'illumination dudit objet.

8. Procédé de transmission de données d'animation d'une scène graphique, destinée à être présentée sur au moins un écran, et ayant été préalablement chargée dans des moyens de construction d'images, sous la forme d'un ensemble d'objets,
**caractérisé en ce qu'**il comprend :
- une étape d'initialisation (41) de l'animation, dans laquelle on assure la transmission:
- d'un masque d'animation unique, délivré en préambule à ladite animation, et affectant à au moins un desdits objets, un masque élémentaire (51) comprenant :
- l'identifiant (61) dudit objet, tel que défini dans ladite scène graphique à animer ; et
- la désignation d'au moins un champ (62) de caractérisation dynamique dudit objet, représentatif d'une caractéristique dudit objet susceptible d'être modifié ;
- une étape d'animation (42), dans laquelle on assure la transmission de trames d'animation, comprenant, selon l'ordre défini par ledit masque, des données de mise à jour des champs de caractérisation dynamiques desdits objets, de façon à permettre leur modification.

9. Dispositif d'animation d'une scène graphique, destinée à être présentée sur au moins un écran, et ayant été préalablement chargée dans des moyens de construction d'images, sous la forme d'un ensemble d'objets,
**caractérisé en ce qu'**il comprend :
- des moyens (11) de construction d'une initialisation de l'animation, à partir :
- d'un masque d'animation unique, délivré en préambule à ladite animation, et affectant à au moins un desdits objets, un masque élémentaire (51) comprenant :
- l'identifiant (61) dudit objet, tel que défini dans ladite scène graphique à animer ; et
- la désignation d'au moins un champ (62) de caractérisation dynamique dudit objet, représentatif d'une caractéristique dudit objet susceptible d'être modifié ;
- des moyens (12) d'animation dynamique de ladite scène, à partir de trames d'animation, comprenant, selon l'ordre défini par ledit masque, des données de mise à jour des champs de caractérisation dynamiques desdits objets, de façon à permettre leur modification.

## Patentansprüche

1. Datensignal für die Animation einer graphischen Szene für Mittel zum Erstellen von Bildern (15), die auf mindestens einem Bildschirm dargestellt werden können (16), wobei die zu animierende graphische Szene vorher in die Mittel zum Erstellen von Bildern in der Form einer Menge von Objekten geladen wurde, wobei mindestens einige dieser Objekte eine eigene Kennzeichnung besitzen,
**dadurch gekennzeichnet, daß** es folgendes umfaßt:
- eine einzige Animationsmaske, die als Präambel (41) dieser Animation geliefert wird, welche mindestens einem dieser Objekte eine Elementarmaske (51) zuordnet, die ihrerseits folgendes umfaßt:
- die Kennzeichnung (61) des erwähnten Objektes, wie in der zu animierenden grafischen Szene definiert und
- die Bezeichnung von zumindest einem dynamischen Charakterisierungsfeld (62) dieses Objektes, welches repräsentativ ist für eine Charakteristik des Objektes, das verändert werden kann;
- Animationsteilbilder (42), die gemäß der von der erwähnten Maske definierten Reihenfolge Daten für die Aktualisierung der dynamischen Charakterisierungsfelder dieser Objekte umfaßt, um deren Änderung zu ermöglichen,
wobei die Mittel zum Erstellen von Bildern (15) die Daten der Animationsmaske dekodieren und, ausgehend von dieser Animationsmaske, die Animation initialisieren und die Szene als Funktion der Animationsteilbilder aktualisieren.

2. Signal nach Anspruch 1,
**dadurch gekennzeichnet, daß** jede der Elementarmasken folgendes umfaßt:
- die Kennzeichnung (61) des erwähnten Objektes (ID);
- einen Bezeichnungsblock (62) (Maske bin), der die aktiven dynamischen Felder präzisiert, welche bei der Animation verändert werden können und die bei der Animation unverändert bleiben;
- eventuell einen Definitionsblock (63) (Qpi) von Quantifizierungsdaten, die auf ein jedes der dynamischen aktiven Felder anwendbar sind.

3. Signal nach Anspruch 2,
**dadurch gekennzeichnet, daß** es sich zumindest bei einigen der erwähnten dynamischen aktiven Felder (63) um Mehrfachfelder handelt, die einen Vektor bilden und,
daß die Elementarmaske eine Information (71) umfaßt, die genau angibt, ob alle Felder, welche den Vektor bilden oder ob nur einige unter ihnen aktiv sind, wobei der Definitionsblock entsprechend angepaßt ist.

4. Signal nach einem der Ansprüche 1 bis 3,
**dadurch gekennzeichnet, daß** in zumindest einigen der Animationsteilbilder, zumindest einige der dynamischen Felder mit Hilfe einer vorhersagenden Kodierung (84) kodiert sind und,
daß in jedem Animationsteilbild einem jeden dynamischen Feld eine Information (102) zugeordnet wird, die angibt, ob dieses Animationsteilbild nach dem vorhersagenden oder nach dem absoluten Modus kodiert ist.

5. Signal nach einem der Ansprüche 1 bis 4,
**dadurch gekennzeichnet, daß** jedes der Animationsteilbilder folgendes umfaßt:
- eine Definitionszone (101), die für jedes der Objekte angibt, ob die das Objekt betreffenden Animationsparameter in dem Animationsteilbild übertragen werden;
- eine Zone von Animationsdaten (102 bis 108), welche die zur Animation der in der Definitionszone erfaßten Objekte liefert.

6. Signal nach Anspruch 5,
**dadurch gekennzeichnet, daß** die Zone von Animationsdaten mindestens einige der Informationen aus der folgenden Gruppe umfaßt:
- den Kodierungstyp (isIntra) (102);
- ein Synchronisierungswort (Sync) (103);
- eine Synchronisierungsreferenz (IParam) (104);
- einen Frequenzwert der Animationsteilbilder für das betrachtete Objekt (IParam) (104);
- einen Sprung von N Teilbildern, während dem eine Information nicht gesendet wird (IParam) (104);
- eine Angabe für die Wertänderung des Quantifizierungsparameters (hasQP) (105);
- einen neuen Wert für den Quantifizierungsparameter (Qpi) (106);
- einen kodierten Wert eines dynamischen Feldes (Ivalueᵢ oder Pvalueᵢ) (107, 108).

7. Signal nach einem der Ansprüche 1 bis 6,
**dadurch gekennzeichnet, daß** die dynamischen Felder der Gruppe angehören, die folgendes umfaßt:
- Felder, welche das Aussehen des Objektes definieren;
- Felder, welche die Position des Objektes definieren;
- Felder, welche die Bewegung des Objektes definieren;
- Felder, welche die Form des Objektes definieren;
- Felder, welche die Beleuchtung des Objektes definieren;

8. Übertragungsverfahren für Animationsdaten einer graphischen Szene, die auf mindestens einem Bildschirm dargestellt werden soll und die vorher in Mittel zum Erstellen von Bildern in der Form einer Menge von Objekten geladen wurde,
**dadurch gekennzeichnet, daß** es folgendes umfaßt:
- einen Initialisierungsschritt (41) für die Animation, in der die Übertragung der folgenden Elemente sichergestellt wird:
- eine einzige Animationsmaske, die in der Präambel dieser Animation geliefert wird, welche mindestens einem dieser Objekte eine Elementammaske (51) zuordnet, die folgendes umfaßt:
- die Kennzeichnung (61) des erwähnten Objektes, wie in der zu animierenden grafischen Szene definiert und
- die Bezeichnung von zumindest einem dynamischen Charakterisierungsfeld (62) dieses Objektes, welches repräsentativ ist für eine Charakteristik des Objektes, das verändert werden kann;
- einen Animationsschritt (42), in dem man die Übertragung von Animationsteilbildem sicherstellt, welche, nach der von der erwähnten Maske definierten Reihenfolge, Daten für die Aktualisierung der dynamischen Charakterisierungsfelder dieser Objekte umfaßt, um deren Änderung zu ermöglichen.

9. Animationsverfahren für eine graphische Szene, die auf mindestens einem Bildschirm dargestellt werden soll und die vorher in Mittel zum Erstellen von Bildern in der Form einer Menge von Objekten geladen wurde, **dadurch gekennzeichnet, daß** es folgendes umfaßt:
- Mittel (11) zum Erstellen einer Initialisierung der Animation, ausgehend von:
- einer einzigen Animationsmaske, die in der Präambel dieser Animation geliefert wird, welche mindestens einem dieser Objekte eine Elementarmaske (51) zuordnet, die folgendes umfaßt:
- die Kennzeichnung (61) dieses Objektes gemäß ihrer Definition in der zu animierenden graphischen Szene;
- die Bezeichnung von zumindest einem dynamischen Charakterisierungsfeld (62) dieses Objektes, welches repräsentativ ist für eine Charakteristik des Objektes, das verändert werden kann;
- dynamische Animationsmittel (12) der Szene, ausgehend von Animationsteilbildem, die gemäß der von der erwähnten Maske definierten Reihenfolge, Daten für die Aktualisierung der dynamischen Charakterisierungsfelder dieser Objekte umfaßt, um deren Änderung zu ermöglichen.

## Claims

1. Animation data signal of a graphic scene, suitable as means for construction of images (15) capable of being presented (16) on at least one screen, the said graphic scene to be animated having previously been loaded into said image construction means in the form of a set of objects, at least some of said objects having their own identification, **characterised in that** it comprises:
a single animation mask, delivered in advance (41) to the said animation, and allocating to at least one of the said objects an elementary mask (51) comprising:
the identifier (61) of the said object as defined in the said graphic scene to be animated; and
the description of at least one dynamic characterisation field (62) of the said object, representing a characteristic of the said object that can be modified;
animation frames (42), comprising, according to the order defined by the said mask, data updating said dynamic characterisation fields of the said objects, such as to permit their modification,
said construction means (15) decoding the data of the said animation mask, and initialising the animation using the mask, and updating said scene according to said animation frames.

2. Signal according to claim 1, **characterised in that** each of the said elementary masks comprises:
the identifier (61) of the said object (ID);
a description block (62) (bin mask) specifying the active dynamic fields capable of being modified during animation, and the dynamic fields that are invariable during animation;
optionally a definition block (63) (Qpi) of quantification data applicable to each of the said active dynamic fields.

3. Signal according to claim 1, **characterised in that** at least some of the said active dynamic fields (63) are multiple fields forming a vector, and **in that** the said elementary mask comprises a data item (71) specifying whether all the fields forming the said vector, or only some of them, are active, the said definition block being modified accordingly.

4. Signal according to any of claims 1 to 3,
**characterised in that** at least some of the said dynamic fields are coded, in at least some of the said animation frames, using a predictive coding (84), and **in that** in every animation frame, each dynamic field is associated with a data item (102) specifying whether the dynamic field is coded in predictive or absolute mode.

5. Signal according to any of claims 1 to 4,
**characterised in that** the said animation frames comprise:
a definition zone (101), indicating for each of the said objects whether its animation parameters are transmitted in the said animation frame;
an animation data zone (102 to 108), delivering the data necessary to the animation of objects listed in the said definition zone.

6. Signal according to claim 5, **characterised in that** the said data animation zone comprises at least some data from a group comprising:
the type of coding (isIntra) (102);
a synchronisation word (Sync) (103);
a synchronisation reference ; (Iparam) (104);
a frequency value of the animation frames for the object in question (Iparam) (104);
a jump of N frames during which a data item will not be sent (Iparam) 104);
an indication of change of value of quantification parameter (hasQP) (105);
a new quantification parameter value (Qpi) 106);
a coded value of a dynamic field (Ivalue₁, or Pvalue₁) (107, 108).

7. Signal according to any of claims 1 to 6,
**characterised in that** the said dynamic fields belong to the group comprising:
fields defining the aspect of the said object;
fields defining the position of the said object;
fields defining the movement of the said object;
fields defining the shape of the said object;
fields defining the illumination of the said object.

8. Method for transmitting animation data of a graphic scene designed to be presented on at least one screen,
**characterised in that** it comprises:
an animation initialisation stage (41) in which transmission takes place of:
a single animation mask delivered in advance to the said animation, and allocating to at least one of the said objects an elementary mask (51) comprising:
the identifier (61) of the said object, as defined in the said graphic scene to be animated; and
description of at least one dynamic characterisation field (62) of the said object,
representative of one characteristic of the said object that can be modified;
an animation stage (42) in which transmission takes place of animation frames comprising, according to the order defined by the mask, data updating the dynamic characterisation fields of the said objects, enable them to be modified.

9. Animation apparatus for a graphic scene designed to be presented on at least one screen, **characterised in that** it comprises:
means (11) for constructing an initialisation of the animation, using:
a single animation mask, delivered in advance to the said animation, and allocating to at least one of the said objects an elementary mask (51) comprising:
the identifier (61) of the said object, as defined in the said graphic scene to be animated; and
description of at least one dynamic characterisation field (62) of the said object, representing a characteristic of the said object to be modified;
dynamic animation means (12) of the said scene, using animation frames, comprising, according to the order defined by the said mask, update data of the dynamic characterisation fields of the said objects in order to modify them.
